# EUROPÄISCHE PATENTSCHRIFT

(11) **EP 3 728 515 B1**
(45) Veröffentlichungstag und Bekanntmachung des Hinweises auf die Patenterteilung: **02.06.2021**
(21) Anmeldenummer: 19798541.9
(22) Anmeldetag: 15.10.2019
(51) Int. Cl.: C09K 11/77, C09K 11/02, C09C 1/30, C09C 3/06

(54) **ERDALKALIMETALLSILIKAT-LEUCHTSTOFF UND VERFAHREN ZUM VERBESSERN DER LANGZEITSTABILITÄT EINES ERDALKALIMETALLSILIKAT-LEUCHTSTOFFES**
ALKALINE EARTH METAL SILICATE LUMINOPHORE AND METHOD FOR IMPROVING THE LONG-TERM STABILITY OF AN ALKALINE EARTH METAL SILICATE LUMINOPHORE
SUBSTANCE LUMINESCENTE À BASE DE SILICATE DE MÉTAUX ALCALINO-TERREUX ET PROCÉDÉ PERMETTANT D'AMÉLIORER LA STABILITÉ À LONG TERME D'UNE SUBSTANCE LUMINESCENTE À BASE DE SILICATE DE MÉTAUX ALCALINO-TERREUX

(30) Priorität: 17.10.2018 DE 102018125754
(43) Veröffentlichungstag der Anmeldung: 28.10.2020
(73) Patentinhaber: Leuchtstoffwerk Breitungen GmbH, 98597 Breitungen (DE)
(72) Erfinder: RÖSLER, Sylke, 99817 Eisenach (DE); SCHMIDT, Anne, 36433 Bad Salzungen (DE); UHLICH, Dominik, 36448 Bad Leibenstein (DE)
(74) Vertreter: Castell, Klaus
(86) Internationale Anmeldenummer: PCT/EP2019/077980
(87) Internationale Veröffentlichungsnummer: WO 2020/079003

(56) Entgegenhaltungen:
- WO-A1-2011/045216
- WO-A1-2011/045359
- WO-A2-2004/104131
- US-A1- 2016 264 862

## Beschreibung

Die vorliegende Erfindung betrifft zunächst ein Verfahren zum Verbessern der Langzeitstabilität eines Erdalkalimetallsilikat-Leuchtstoffes durch Beschichten des in Form von Körnern vorliegenden Erdalkalimetallsilikat-Leuchtstoffes. Erdalkalimetallsilikat-Leuchtstoffe werden beispielsweise als Konversionsleuchtstoff in weiß leuchtenden LED-basierten Lichtquellen verwendet. Im Weiteren betrifft die Erfindung einen Erdalkalimetallsilikat-Leuchtstoff.

Erdalkalimetallsilikat-Leuchtstoffe weisen eine merkliche Unbeständigkeit gegenüber Feuchtigkeit auf, die ihre Brauchbarkeit in vielen Anwendungen bisher stark einschränken. Als wesentliche durch Feuchtigkeit hervorgerufene, unerwünschte Reaktion wird bei Erdalkalimetallorthosilikat-Leuchtstoffen die folgende chemische Reaktion gesehen:

(Ba, Sr, Ca)₂SiO₄ + 2 H₂O → 2 (Ba, Sr, Ca) (OH)₂ + SiO₂

Die Erdalkalimetallsilikat-Leuchtstoffe neigen bei längerer Lagerung zur Agglomeration und Verklumpung, wodurch die Verwendung der Leuchtstoffe stark eingeschränkt wird. Weiterhin zeigen viele Erdalkalimetallsilikat-Leuchtstoffe bei einer längeren Lagerung oder bei einem längeren Einsatz, insbesondere in LED-basierten Lichtquellen, irreversible Lumineszenzverluste und Degradationserscheinungen. Neben der Problematik der Feuchtigkeit können auch Halogene für die Anwendung problematisch sein. Daher werden von vielen LED-Herstellern Grenzwerte für den Halogenid-Anteil im Leuchtstoff festgelegt.

Die Erdalkalimetallorthosilikat-Leuchtstoffe sind nicht die einzigen Pulver, welche mit Qualitätsverlusten durch Feuchtigkeit, Sauerstoff oder anderen Verbindungen in der Luft zu kämpfen haben. Um diesem entgegenzuwirken, gibt es eine Vielzahl von Versuchen, diese Pulver durch eine Sperrschicht zu schützen. Im Folgenden sind relevante Lösungen zusammengefasst.

Die US 7,202,598 B2, die US 6,890,593 B2, die US 2,905,572, die US 2002/0150760 A1, die US 4,199,617 und die US 4,690,832 zeigen verschiedene Verfahren zum Beschichten von Leuchtstoffen.

In dem wissenschaftlichen Artikel von Guo, C.; Chu, B. und Su, Q.: "Improving the stability of alkaline earth sulfide-based phosphors" in Applied Surface Science, 225(2004), Seiten 198-203 wird die Beschichtung des Erdalkalimetallsulfid-basierten Leuchtstoffs Ca_{0,8}Sr_{0,2}S:Eu²⁺, Tm³⁺ durch ZnO- und Al₂O₃-Partikel beschrieben. Dabei wurde ein nasschemisches Verfahren mit anschließender Temperung und Kalzinierung angewendet. Die Halbmetalloxide werden vorzugsweise als kleine Inseln abgeschieden, wodurch die Oberschicht des beschichteten Leuchtstoffes vorzugsweise porös ist.

Die US 5,958,591, die US 2003/0168669 A1, die US 5,220,243 zeigen verschiedene Verfahren zum Beschichten von Leuchtstoffen mit Aluminiumoxid.

Die US 5,080,928 zeigt ein CVD-Verfahren zur Abscheidung von Aluminiumoxidhydroxid auf zinksulfidische Leuchtstoffe.

Die DE 698 30 180 T2 zeigt verkapselte elektrolumineszente Leuchtstoffpartikel auf der Basis von Zinksulfid, die jeweils eine oder mehrere im Wesentlichen transparente weitgehend zusammenhängende Mehrfachoxidbeschichtungen auf Aluminiumoxidbasis besitzen. Dabei sind sowohl ein Leuchtstoff-Mehrfachmetalloxidschicht- Aufbau als auch ein Leuchtstoff-reines-Aluminiumoxid-Mehrfachoxidschicht-Aufbau beschrieben. Die Mehrfachmetalloxidbeschichtung umfasst ein Aluminiumoxid und mindestens ein weiteres Metalloxid. Sowohl die Aluminiumoxidschicht als auch die Mehrfachoxidschicht werden durch chemische Gasphasenabscheidung in Gegenwart von Wasser beschichtet. Vergleichsmaterialien, bei denen der Leuchtstoff nur mit Aluminiumoxid beschichtet wurde, weisen eine niedrige Widerstandsfähigkeit gegenüber kondensierter Feuchtigkeit und flüssigem Wasser auf.

Die DE 10 2007 053 285 A1 zeigt beschichtete Leuchtstoffpartikel, welche durch Mischen von mindestens zwei Edukten und mindestens einem Dotierstoff nach nasschemischen Methoden und anschließender Kalzinierung zu Leuchtstoff-Precursoren hergestellt werden. Bei dem nasschemischen Verfahren wird das Metall-, Übergangsmetall- oder Halbmetalloxid vorzugsweise in Form von kleinen Inseln abgeschieden, wodurch die Oberschicht des beschichteten Leuchtstoffes vorzugsweise porös ist. Durch die Kalzinierung kann eine anschließende Vermahlung notwendig sein, wobei eine partielle Beschädigung der Schutzschicht nicht auszuschließen ist. Das Metalloxid ist beispielsweise durch Aluminiumoxid gebildet.

Die EP 2 396 385 B1 zeigt ein Verfahren zur Verbesserung der Langzeitstabilität von Erdalkalimetallsilikat-Leuchtstoffen. In einem nasschemischen Verfahren erfolgt eine Modifikation der Oberfläche von Körnern des Erdalkalimetallsilikat-Leuchtstoffe durch eine chemische Reaktion des Erdalkalimetalls an der Oberfläche mit Anionen, wie SO₄²⁻, PO₄³⁻, CO₃²⁻, C₂O₄²⁻, SiO₃²⁻ und SiF₆²⁻.

Aus dem wissenschaftlichen Artikel von Wong, P. und Robinson, M.: "Chemical Vapor Deposition of Polycrystalline Al2O3" in J. American Ceram. Soc. 53(1970), Seiten 617-621, aus der US 4,999,219, aus der US 4,950,948, aus der US 5,223,341 und aus der US 2012/0199793 A1 sind CVD-Verfahren zur Abscheidung von Aluminiumoxid bekannt. Dabei reagiert ein aluminiumhaltiger Precursor, wie z. B. AlCl₃ oder TMA, mit CO₂, O₂ oder H₂O zum Aluminiumoxid, Aluminiumhydroxid oder Aluminiumoxidhydroxid.

Die EP 0 160 856 B1 lehrt die Beschichtung eines Calciumhalogenphosphat-Leuchtstoffes mit einer homogenen Schicht aus Aluminiumoxid unter Nutzung eines CVD-Verfahrens. Trimethylaluminium und Sauerstoff werden als Edukte verwendet. Dabei herrschen Temperaturen von bis zu 550°C vor.

In der EP 2 209 869 B1 und in der DE 10 2007 056 343 A1 werden oberflächenmodifizierte Leuchtstoffpartikel auf der Basis von (Ca,Sr,Ba)₂SiO₄ gezeigt, auf die eine Metall-, Übergangsmetall- oder Halbmetalloxidbeschichtung und eine organische Beschichtung aufgebracht sind. Die Beschichtung mit dem Metall-, Übergangsmetall- oder Halbmetalloxid erfolgt in einem nasschemischen Prozess und dient der Anpassung der Leuchtstoffoberflächeneigenschaften an die chemischen Eigenschaften von Bindemitteln, wie sie in LED-basierten Lichtquellen eingesetzt werden. Das Metalloxid ist beispielsweise durch Aluminiumoxid gebildet. In der Beschichtung der Leuchtstoffpartikel verbleiben Natrium und Chlorid als Verunreinigungen. Besonders das Chlorid kann in der Anwendung zu Problemen führen. So gibt es bei vielen LED-Herstellern einen Grenzwert für Halogene im Leuchtstoffpulver. Es ist fraglich, ob ein Halogengehalt unterhalb dieses Grenzwertes nach dieser Methode bei einer gleichzeitig ausreichenden Beschichtung erzielt werden kann. Um eine ausreichende Feuchtigkeitsstabilität zu erhalten, wurde zusätzlich eine Polymerschicht aufgebracht.

Die US 2016/0264862 A1 zeigt Europium-dotierte Silikatleuchtstoffe, welche mit Aluminiumoxid beschichtet sind. Beispielsweise wird Ba_{1,8}Sr_{0,15}SiO₄:Eu_{0,05} genannt, auf welchem eine Atomlagenschicht unter Verwendung von Trimethylaluminium und Wasserdampf abgeschieden wird. In diesem Abscheidungsprozess entsteht eine Beschichtung aus Aluminiumoxid.

Die WO 2004/104131 A2 zeigt ein CVD-Verfahren zur Beschichtung von Leuchtstoffkörnern. Dabei werden Wasserdampf und Trimethylaluminium jeweils über ein Trägergas in einen Reaktorraum geführt, wo auf den Leuchtstoffkörnern eine Beschichtung entsteht. Im Reaktorraum herrscht eine Temperatur von vorzugsweise 430°C. Das Trimethylaluminium wird auf eine Temperatur von 34°C erwärmt. Das Wasser wird auf eine Temperatur von 70°C erwärmt.

Die WO 2016/173691 A1 zeigt die Beschichtung von Disilikat-Leuchtstoffen mit Aluminiumoxid. Als Ausgangsstoffe für die Beschichtung werden Trimethylaluminium und Wasserdampf mit Stickstoff als Trägergas verwendet. Die Grundgitter der Leuchtstoffe weisen beispielsweise die Zusammensetzung Ba₂MgSi₂O₇ auf.

Der Stand der Technik zeigt, dass es im Wesentlichen drei Methoden zur Verkapselung von Leuchtstoffpartikeln gibt. Eine erste Methode ist eine mechanische Mischung des Leuchtstoffes mit einem nanopartikulären Fremdstoff. Eine zweite Methode ist eine nasschemische Abscheidung einer Schutzschicht oder eines Vorläufers auf den Leuchtstoff. Eine dritte Methode ist eine Abscheidung einer Schutzschicht mittels CVD in einer Wirbelschicht.

Ein Vorteil einer Verkapselung eines Leuchtstoffes mit einer mechanischen Mischung ist, dass die genaue Zusammensetzung der Schutzschicht bekannt ist und die Durchführung sehr einfach ist. Allerdings hängt die Dichte der Schutzschicht auch stark von dem Massenverhältnis des Leuchtstoffes zu der Schutzschicht sowie dem Durchmesser der Körner des zu beschichteten Leuchtstoffes ab. Je kleiner der Durchmesser des zu beschichtenden Materials ist, desto größer ist das Oberfläche-zu-Volumen-Verhältnis und damit auch das Oberfläche-zu-Masse-Verhältnis. Wird nicht ausreichend Beschichtungsmaterial zugegeben, ist die Leuchtstoffoberfläche nicht vollständig belegt und die Schicht damit undicht. Wird zu viel Beschichtungsmaterial zugegeben, ballen sich diese zu Agglomeraten zusammen und die Schicht ist in ihrer Dicke ungleichmäßig und/oder die beschichteten Leuchtstoffe sind mit Klumpen des Beschichtungsmaterials verunreinigt, welche schwer abzutrennen sind. Selbst wenn das Verhältnis optimal ist, so ist das Beschichtungsmaterial nur physikalisch auf dem Leuchtstoff adsorbiert, porös und undicht. Um eine geschlossene Schutzschicht zu erhalten, muss das Gemisch zusätzlich getempert werden. Ein solcher Temper-Schritt müsste bei Erdalkalimetallorthosilikat-Leuchtstoffen in einer reduzierenden Atmosphäre stattfinden und kann die Intensität signifikant verschlechtern. Daher ist eine mechanische Mischung mit anschließendem Tempern für Erdalkalimetallorthosilikat-Leuchtstoffe ungeeignet.

Bei einer nasschemischen Beschichtung wird der Leuchtstoff in ein Lösungsmittel, wie zum Beispiel Wasser oder Ethanol suspendiert. Dieser Suspension werden in unterschiedlichen Methoden zwei Edukte zugegeben, welche im Idealfall an der Leuchtstoffoberfläche zum Beschichtungsmaterial oder dessen Vorläuferverbindung reagieren. Dabei müssen die Prozessbedingungen, wie zum Beispiel pH-Wert und Temperatur, häufig sehr genau eingehalten werden. Nach dem Abtrennen des beschichteten Leuchtstoffes von der Flüssigphase erfolgt eine Trocknung. In der Realität bildet sich das Material der Beschichtung oder dessen Vorläuferverbindung auch in der freien Lösung. Die so gebildeten Partikel lagern sich an die Leuchtstoffoberfläche an. Dadurch ergibt sich eine poröse Schicht, welche nicht vollständig abgeschlossen ist, sodass Feuchtigkeit, Sauerstoff und andere Stoffe aus der Luft den Leuchtstoff noch immer angreifen können. Um die Schicht abzudichten, wurden bereits verschiedene Methoden beschrieben. Eine erste Methode ist ein Tempern des Materials wie nach dem mechanischen Mischen. Neben den oben beschriebenen Problemen kann ein Sintern der beschichteten Leuchtstoffpartikel nicht vollständig verhindert werden. Aufgrund der porösen Natur der Schutzschicht ist eine Trennung durch Vermahlung zwar möglich, aber dabei wird auch die Schutzschicht wieder teilweise beschädigt. Eine zweite Methode ist ein Abscheiden von Metallmischoxiden. So kann zum Beispiel die Schutzwirkung einer Aluminium-Metall-Oxid-Schicht im Vergleich zu einer reinen Aluminiumoxidschicht deutlich erhöht sein. Derartige Ansätze gibt es nicht für Erdalkalimetallorthosilikat-Leuchtstoffe. Eine dritte Methode ist ein Abscheiden einer zusätzlichen Polymer- oder Metallmischoxidschicht. Dadurch wird der Kontakt zwischen der Aluminiumoxidschicht und Feuchtigkeit verhindert. Neben einem deutlichen Mehraufwand in der Herstellung steigt auch die Menge der Abprodukte. Diese Methode wird auch für Erdalkalimetallorthosilikat-Leuchtstoffe angewendet.

Ein weiteres Problem der nasschemischen Beschichtung sind die Verunreinigungen. Die Edukte, aus denen sich die Schutzschicht bildet, enthält immer Fremdelemente, wie zum Beispiel Na und Cl aus AlCl₃ + NaOH → Al(OH)₃ (+ NaCl) → Al₂O₃ (+ H₂O). Ein partieller Einbau dieser Fremdelemente in die Schutzschicht kann durch eine geringe Reaktionsgeschwindigkeit und Waschprozesse zwar minimiert, aber nicht völlig vermieden werden. Solche Elemente können in der Anwendung zu Problemen führen. Andere Problematiken dieser Methode sind das schwierige Abtrennen von Nebenprodukten und die relativ hohen Mengen an Abprodukten, wie zum Beispiel Lösungsmittel.

Die Abscheidung einer Schutzschicht durch die abproduktarme CVD-Methode wurde für verschiedene Leuchtstoffsysteme beschrieben. Ein großer Vorteil dieser Methode ist es, dass die Partikel durch die Wirbelschicht vereinzelt vorliegen. Ein Zusammenkleben der einzelnen Leuchtstoffpartikel kann daher weitestgehend vermieden und eine homogene und abgeschlossene Schichtbildung gewährleistet werden. Ähnlich wie im nasschemischen Verfahren kann die Bildung des Schichtmaterials im Fluid statt ausschließlich an der Leuchtstoffoberfläche nicht ausgeschlossen werden. Allerdings werden diese aufgrund des vorherrschenden Gasstromes noch während des Prozesses aus dem Reaktorraum herausgefördert. Eine Verunreinigung des beschichteten Leuchtstoffes mit zum Beispiel Aluminiumoxid kann dadurch vermieden werden.

Die beschriebenen CVD-Methoden scheinen für die Beschichtung von Erdalkalimetallorthosilikat-Leuchtstoffen nicht geeignet. Insofern ein Aluminium-Precursor und CO₂ verwendet werden, sind für die Bildung von Aluminiumoxid sehr hohe Temperaturen notwendig. Bei diesen Temperaturen ist zu erwarten, dass die Erdalkalimetallorthosilikat-Leuchtstoffe ergrauen und an Intensität verlieren. Insofern ein Aluminium-Precursor und O₂ verwendet werden, sind für die Bildung von Aluminiumoxid ebenfalls hohe Temperaturen notwendig. Dabei ist ein Ergrauen des Erdalkalimetallorthosilikat-Leuchtstoffes zu erwarten, was wiederum mit einem Intensitätsverlust einhergeht. Aufgrund der Gegenwart von O₂ besteht außerdem die Gefahr, dass der (Eu²⁺) - Aktivator oxidiert wird, was zu einer Veränderung des Farbortes führt. Insofern eine Verwendung eines Aluminium-Precursors und H₂O in Erwägung gezogen würde, ist zu berücksichtigen, dass die Erdalkalimetallorthosilikat-Leuchtstoffe stark wasser- und feuchtigkeitsempfindlich sind. Bei einer Reaktion in Gegenwart von Wasser sind daher eine Zersetzung und damit ein Intensitätsverlust des Erdalkalimetallorthosilikat-Leuchtstoffes zu erwarten.

Die Aufgabe der vorliegenden Erfindung besteht ausgehend vom Stand der Technik darin, die Langzeitstabilität von Erdalkalimetallsilikat-Leuchtstoffen zu verbessern, ohne eine relevante Senkung der Emissionsintensität hinnehmen zu müssen.

Die genannte Aufgabe wird durch einen Verfahren gemäß dem beigefügten Anspruch 1 gelöst. Die Aufgabe wird weiterhin durch einen Erdalkalimetallsilikat-Leuchtstoff gemäß dem beigefügten nebengeordneten Anspruch 8 gelöst.

Das erfindungsgemäße Verfahren dient zum Verbessern der Langzeitstabilität eines Leuchtstoffes. Bei dem Leuchtstoff handelt es sich um einen Erdalkalimetallsilikat-Leuchtstoff. Dieser Leuchtstoff weist ein Grundgitter gemäß der allgemeinen chemischen Formel EAₓSi_{y}O_{z} auf, wobei EA durch ein oder mehrere Erdalkalimetalle gebildet ist und die Bedingung x, y, z > 0 gilt. Der zu verbessernde Leuchtstoff liegt in Form von Körnern vor. Die Körner stellen Partikel dar. Das erfindungsgemäße Verfahren dient insbesondere zum Beschichten der Körner des Leuchtstoffes.

In das Grundgitter ist ein Aktivator, wie beispielsweise Eu²⁺ oder Mn²⁺ dotiert. Es können auch mehrere Aktivatoren sowie weitere Koaktivatoren oder Sensibilisatoren in das Grundgitter dotiert sein.

Der Leuchtstoff hat die grundlegende Eigenschaft, Strahlung in einem ersten Wellenlängenbereich zu absorbieren und Strahlung in einem zweiten, sich vom ersten Wellenlängenbereich unterscheidenden Wellenlängenbereich zu emittieren. Es handelt sich somit um einen Konversionsleuchtstoff. Bei einer typischen Ausführungsform absorbiert der Leuchtstoff Strahlung im blauen und/oder ultravioletten Wellenlängenbereich und emittiert Strahlung im sichtbaren Wellenlängenbereich, beispielsweise im blauen, grünen, gelbgrünen, gelben und/oder orangefarbigen Wellenlängenbereich. Die Erfindung ist jedoch nicht auf bestimmte Wellenlängenbereiche beschränkt.

Bei dem erfindungsgemäßen Verfahren handelt es sich um eine chemische Gasphasenabscheidung (CVD), bei welcher die einzelnen Körner des Erdalkalimetallsilikat-Leuchtstoffes bevorzugt in einer Wirbelschicht suspendiert sind.

In einem Schritt des erfindungsgemäßen Verfahrens erfolgt ein Erwärmen der aus dem Erdalkalimetallsilikat-Leuchtstoff bestehenden Körner in einem Reaktorraum. Hierfür umfasst der Reaktorraum bevorzugt eine Ofenheizung, mit welcher die Körner des Erdalkalimetallsilikat-Leuchtstoffes erwärmt werden. Das Erwärmen der aus dem Erdalkalimetallsilikat-Leuchtstoff bestehenden Körner erfolgt bis zu einer Temperatur, welche bevorzugt unter einer Zerfallstemperatur des noch unbeschichteten Erdalkalimetallsilikat-Leuchtstoffes liegt. Die Körner des Leuchtstoffes befinden sich bevorzugt in einer Wirbelschicht im Reaktorraum, sodass die Oberflächen der Körner frei liegen und diese einer ständigen Durchmischung unterliegen.

In einem weiteren Schritt erfolgt ein Erwärmen einer flüchtigen aluminiumorganischen Verbindung, bei welcher es sich bevorzugt um Trimethylaluminium TMA handelt. Die Verwendung einer anderen aluminiumorganischen Verbindung als Trimethylaluminium ist auch möglich und entspricht dem Geist der Erfindung. Die erwärmte flüchtige aluminiumorganische Verbindung wird mit einem ersten Trägergas durchströmt. Hierdurch wird ein die flüchtige aluminiumorganische Verbindung enthaltendes erstes Trägergasgemisch erhalten. Zudem erfolgt ein Erwärmen von Wasser H₂O. Das erwärmte Wasser wird mit einem zweiten Trägergas durchströmt. Hierdurch wird ein das Wasser enthaltendes zweites Trägergasgemisch erhalten. Das erste und das zweite Trägergas können, müssen aber nicht identisch sein.

Erfindungsgemäß werden das die flüchtige aluminiumorganische Verbindung enthaltende erste Trägergasgemisch und das das Wasser enthaltende zweite Trägergasgemisch in den Reaktorraum eingeleitet, wo die Körner des Erdalkalimetallsilikat-Leuchtstoffes von dem die flüchtige aluminiumorganische Verbindung enthaltenden ersten Trägergasgemisch und mit dem das Wasser enthaltenden zweiten Trägergasgemisch eingehüllt werden. Die flüchtige aluminiumorganische Verbindung und das Wasser reagieren im Reaktorraum und bilden zumindest überwiegend Aluminiumoxidhydroxid AlO(OH). Diese Reaktion findet im Bereich der Körner des Erdalkalimetallsilikat-Leuchtstoffes statt, wodurch eine gleichmäßige geschlossene Beschichtung der Körner des Erdalkalimetallsilikat-Leuchtstoffes ausgebildet wird. Die Beschichtung ist insbesondere durch das Aluminiumoxidhydroxid gebildet.

Ein besonderer Vorteil des erfindungsgemäßen Verfahrens besteht darin, dass das durch CVD auf den Körnern des Erdalkalimetallorthosilikat-Leuchtstoffes abgeschiedene Aluminiumoxidhydroxid nur eine sehr dünne Beschichtung auf den Körnern des Leuchtstoffes bildet, welche die Emissionsintensität des Erdalkalimetallorthosilikat-Leuchtstoffes nicht oder nicht signifikant beeinträchtigt. Dennoch bewirkt diese sehr dünne Beschichtung eine deutlich erhöhte Beständigkeit gegenüber Wasser, Luft und Feuchtigkeit und eine verbesserte Langzeitstabilität einer bevorzugten Anwendung des Erdalkalimetallorthosilikat-Leuchtstoffes in einer LED.

Die Beschichtung an den Oberflächen der Körner ist transparent oder zumindest weitgehend transparent für die Strahlung im ersten Wellenlängenbereich und für die Strahlung im zweiten Wellenlängenbereich. Insbesondere zeigt die Beschichtung keine absorbierenden Eigenschaften für Strahlung mit einer Wellenlänge von mehr als 380 nm. Bevorzugt wird jeweils die gesamte Oberfläche der Körner des Leuchtstoffes mit dem Aluminiumoxidhydroxid beschichtet.

Die Beschichtung bildet eine Sperrschicht aus dem Aluminiumoxidhydroxid, welche die Körner bevorzugt an ihrer gesamten Oberfläche umhüllt. Die Beschichtung weist eine Dicke auf, die bevorzugt zwischen 10 nm und 1 µm beträgt. Die durch die Beschichtung gebildete Sperrschicht zeichnet sich dadurch aus, dass das darin enthaltene Aluminiumoxidhydroxid bevorzugt frei von Halogenen und Alkali-Elementen ist.

Die Erfindung zeigt auf überraschende Weise, wie Aluminiumoxidhydroxid als eine schützende Beschichtung auf die Körner des Erdalkalimetallorthosilikat-Leuchtstoffes mit einer CVD-Methode in Gegenwart von Wasser aufbringbar ist. Das erfindungsgemäße Verfahren führt auch bei stark wasserempfindlichen Ausführungen des Erdalkalimetallorthosilikat-Leuchtstoffes nicht zu einer signifikanten Veränderung des Farbortes oder der Anfangsintensität im Vergleich zu dem noch unbeschichteten Erdalkalimetallorthosilikat-Leuchtstoff. Jedoch zeigt der erfindungsgemäß beschichtete Erdalkalimetallorthosilikat-Leuchtstoff eine deutlich höhere Stabilität gegenüber Wasser und Feuchtigkeit sowie eine verbesserte Langzeitstabilität in der Lampe auf.

Das Grundgitter des zu beschichtenden Erdalkalimetallsilikat-Leuchtstoffes ist bevorzugt durch die Formel (Baₐ, Sr_{b}, Ca_{c})₂SiO₄ beschrieben. Zumindest eine der Variablen a, b und c ist größer als 0 und es gilt a + b + c = 1. Bei diesem Leuchtstoff handelt es sich um ein Erdalkalimetallorthosilikat, welches insbesondere für die Anwendung in LED-basierten Lichtquellen geeignet ist. Bei dem Aktivator handelt es sich bevorzugt um Europium Eu²⁺. Dieser Leuchtstoff ist in einer vereinfachten Notation als (Ba,Sr,Ca)₂SiO₂:Eu beschreibbar. Dieser Leuchtstoff emittiert bei Anregung bevorzugt Strahlung im grünen, gelbgrünen, gelben und/oder orangefarbigen Wellenlängenbereich.

Bei bevorzugten Ausführungsformen umfasst das EA im Grundgitter Magnesium und ein weiteres Erdalkalimetall. Bei diesen Ausführungsformen weist das Grundgitter eine der folgenden chemischen Formeln auf: EA'₃MgSi₂O₈, EA'₂MgSi₂O₇ und EA'₂MgSiO₅, wobei EA' durch ein oder mehrere Erdalkalimetalle ausgenommen Magnesium gebildet ist. Besonders bevorzugt weist das Grundgitter die Formel EA'₃MgSi₂O₈, wobei das EA bevorzugt durch Sr gebildet ist. Entsprechend weist das Grundgitter die Formel Sr₃MgSi₂O₈ auf. Bei dem Aktivator handelt es sich bevorzugt um Europium Eu²⁺. Dieser Leuchtstoff ist in einer vereinfachten Notation als Sr₃MgSi₂O₈:Eu beschreibbar. Dieser Leuchtstoff emittiert bei Anregung bevorzugt Strahlung im blauen Wellenlängenbereich.

Bei weiteren bevorzugten Ausführungsformen weist das Grundgitter die chemische Formel EA₃SiO₅ oder die chemische Formel EASiO₃ auf.

Das Silizium im Erdalkalimetallsilikat kann teilweise durch Aluminium, Bor, Germanium, Gallium und/oder Phosphor ersetzt sein. Derartige Möglichkeiten der Modifikation von Erdalkalimetallsilikat-Leuchtstoffen sind dem Fachmann bekannt. Jedenfalls wird der Fachmann einen derart modifizierten Leuchtstoff auch als Erdalkalimetallsilikat bezeichnen und in den meisten Fällen durch die allgemeine Formel EAₓSi_{y}O_{z} benennen. Für eine besonders genaue Benennung wird der Fachmann ggf. die allgemeine Formel EAₓ(Si,Al,B,Ge,Ga,P)_{y}O_{z} oder auch die Formel EAₓ(Si_{1-e-f-g-h-i}AlₑB_{f}Ge_{g}GaₕPᵢ)_{y}O_{z} mit e, f, g, h und/oder i > 0 angeben. Eine weitere mögliche Modifikation der Erdalkalimetallsilikat-Leuchtstoffe ist der Einbau von bis zu 10 Mol-% Halogenidionen.

Die Körner des Erdalkalimetallsilikat-Leuchtstoffes bilden Partikel aus, welche jeweils einen Durchmesser besitzen, welcher bevorzugt zwischen 1 µm und 2 mm beträgt. Der Durchmesser beträgt weiter bevorzugt zwischen 1 µm und 2 mm und besonders bevorzugt zwischen 10 µm und 50 µm. Die Erfindung ist nicht auf bestimmte Korngrößen beschränkt.

Die flüchtige aluminiumorganische Verbindung ist bevorzugt durch ein Alkylderivat oder ein Acrylderivat des Aluminiums gebildet und weist bevorzugt eine der allgemeinen Formeln R₃Al, R₂AlX, RAlX₂ auf, wobei X für -H, -Halogen, -NR₂ oder -OR steht oder 2X für =O steht. Besonders bevorzugt steht X für -H oder -OR oder 2X für =O, sodass keine Halogen- oder Stickstoffverunreinigungen in die Beschichtung eingebaut werden.

Besonders bevorzugt ist die flüchtige aluminiumorganische Verbindung durch Trimethylaluminium TMA gebildet. Bei einer alternativ bevorzugten Ausführungsform ist die flüchtige aluminiumorganische Verbindung durch Triethylaluminium TEA gebildet.

Das Erwärmen und Durchströmen der flüchtigen aluminiumorganischen Verbindung erfolgen bevorzugt in einem ersten Bubbler. Die bevorzugt durch Trimethylaluminium gebildete flüchtige aluminiumorganische Verbindung wird bevorzugt auf eine Temperatur zwischen 15°C und 70°C, besonders bevorzugt auf eine Temperatur zwischen 40°C und 55°C erwärmt. Die alternativ bevorzugt durch Triethylaluminium gebildete flüchtige aluminiumorganische Verbindung wird bevorzugt auf eine Temperatur zwischen 150°C und 200°C erwärmt. Das erste Trägergas wird bevorzugt in ein Zuleitungsrohr des Bubblers eingeleitet. Das die flüchtige aluminiumorganische Verbindung enthaltende erste Trägergasgemisch strömt bevorzugt aus einem Entnahmerohr des ersten Bubblers aus.

Das Erwärmen und Durchströmen des Wassers erfolgen bevorzugt in einem zweiten Bubbler. Das Wasser wird bevorzugt auf eine Temperatur zwischen 50°C und 90°C, besonders bevorzugt auf eine Temperatur zwischen 70°C und 90°C erwärmt. Das zweite Trägergas wird bevorzugt in ein Zuleitungsrohr des Bubblers eingeleitet. Das das Wasser enthaltende zweite Trägergasgemisch strömt bevorzugt aus einem Entnahmerohr des zweiten Bubblers aus.

Das Erwärmen und Durchströmen der flüchtigen aluminiumorganischen Verbindung sowie das Erwärmen und Durchströmen des Wassers erfolgen bevorzugt separat und bevorzugt in jeweils einem Bubbler. Bei den Bubblern handelt es sich bevorzugt jeweils um einen Dampfdrucksättiger.

Das die flüchtige aluminiumorganische Verbindung enthaltende erste Trägergasgemisch wird in den Reaktorraum mit einem Volumenstrom geleitet, welcher bevorzugt zwischen 2 und 30 soll-Liter je Minute beträgt. Der Volumenstrom beträgt besonders bevorzugt zwischen 5 und 15 soll-Liter je Minute.

Das das Wasser enthaltende zweite Trägergasgemisch wird in den Reaktorraum mit einem Volumenstrom geleitet, welcher bevorzugt zwischen 2 und 10 soll-Liter je Minute beträgt. Der Volumenstrom beträgt besonders bevorzugt zwischen 5 und 8 soll-Liter je Minute.

Das erste Trägergas, welches die flüchtige aluminiumorganische Verbindung durchströmt, und das zweite Trägergas, welches das Wasser durchströmt, sind bevorzugt jeweils durch Stickstoff N₂ gebildet.

Die Körner des Leuchtstoffes werden in dem Reaktorraum auf eine Temperatur erwärmt, die bevorzugt zwischen 150°C und 250°C, besonders bevorzugt zwischen 170°C und 180°C beträgt. Das Erwärmen der Körner des Leuchtstoffes in dem Reaktorraum erfolgt bevorzugt, bevor das die flüchtige aluminiumorganische Verbindung enthaltende erste Trägergasgemisch und das das Wasser enthaltende zweite Trägergasgemisch in den Reaktorraum geleitet werden. Das Erwärmen der Körner des Leuchtstoffes in dem Reaktorraum erfolgt bevorzugt in einer inerten Atmosphäre, wofür bevorzugt ein gleiches Gas wie das erste und zweite Trägergas in den Reaktorraum geleitet wird. Hierfür werden bevorzugt das Zuleitungsrohr und das Entnahmerohr eines der Bubbler oder der beiden Bubbler kurzgeschlossen, sodass Gas aus einer Quelle des Trägergases unter Umgehung des Bubblers in den Reaktorraum geleitet wird. Sobald die Körner des Leuchtstoffes in dem Reaktorraum auf die festgelegte Temperatur erwärmt wurden, wird der Kurzschluss zwischen dem Zuleitungsrohr und dem Entnahmerohr des betreffenden Bubblers getrennt, woraufhin das Trägergas die flüchtige aluminiumorganische Verbindung bzw. das Wasser aufnimmt und gemeinsam mit diesem in den Reaktorraum geleitet wird. Bevorzugt wird der das Trimethylaluminium enthaltende erste Bubbler kurzgeschlossen, um Gas aus der Quelle des Trägergases unter Umgehung des Bubblers in den Reaktorraum zu leiten und so die Wirbelschicht erzeugen.

Das die flüchtige aluminiumorganische Verbindung enthaltende erste Trägergasgemisch wird bevorzugt durch eine Bodenplatte des Reaktorraumes in den Reaktorraum geleitet, sodass es von unten in den Reaktorraum strömt.

Das das Wasser enthaltende zweite Trägergasgemisch wird bevorzugt durch eine in den Reaktorraum ragende Zuführung geleitet. Diese Zuführung ist bevorzugt durch eine von oben in den Reaktorraum ragende Lanze gebildet, sodass das das Wasser enthaltende zweite Trägergasgemisch von oben in den Reaktorraum strömt. Dadurch, dass das die flüchtige aluminiumorganische Verbindung enthaltende erste Trägergasgemisch von unten in den Reaktorraum strömt und dass das das Wasser enthaltenden zweite Trägergasgemisch von oben in den Reaktorraum strömt, wird gewährleistet, dass die flüchtige aluminiumorganische Verbindung und das Wasser erst in dem Bereich der in dem Reaktorraum befindlichen Körner des Erdalkalimetallsilikat-Leuchtstoffes aufeinandertreffen und reagieren. Die Zuführung ist alternativ bevorzugt durch Düsen in der Bodenplatte gebildet. Alternativ bevorzugt wird das die flüchtige aluminiumorganische Verbindung enthaltende erste Trägergasgemisch durch die Lanze in den Reaktorraum geleitet, während das das Wasser enthaltende zweite Trägergasgemisch durch die Bodenplatte des Reaktorraumes in den Reaktorraum geleitet wird.

Die Aluminiumoxidhydroxidpartikel, welche sich in der Gasphase bilden, aber nicht an der Oberfläche der Körner des Erdalkalimetallsilikat-Leuchtstoffes anhaften, werden aufgrund des vorherrschenden Gasstromes aus dem Reaktorraum gefördert. Dadurch wird eine Verunreinigung des Erdalkalimetallsilikat-Leuchtstoffes mit Aluminiumoxidhydroxid vermieden.

Das Einleiten des die bevorzugt durch Trimethylaluminium gebildete flüchtige aluminiumorganische Verbindung enthaltenden ersten Trägergasgemischs und des das Wasser enthaltenden zweiten Trägergasgemischs in den Reaktorraum erfolgt so lange, bis eine Menge der flüchtigen aluminiumorganischen Verbindung in den Reaktorraum eingeleitet wurde, welche bevorzugt zwischen 20 und 120 Gramm je Kilogramm des im Reaktorraum befindlichen Erdalkalimetallsilikat-Leuchtstoffes beträgt. Diese Menge beträgt besonders bevorzugt zwischen 40 und 75 Gramm je Kilogramm des im Reaktorraum befindlichen Erdalkalimetallsilikat-Leuchtstoffes.

Nachdem das Einleiten des die flüchtige aluminiumorganische Verbindung enthaltenden ersten Trägergasgemischs und des das Wasser enthaltenden zweiten Trägergasgemischs in den Reaktorraum beendet wurde, wird bevorzugt weiterhin ein inertes Gas in den Reaktorraum geleitet, insbesondere ein gleiches Gas wie das Trägergas. Hierfür werden bevorzugt das Zuleitungsrohr und das Entnahmerohr eines der Bubbler oder der beiden Bubbler kurzgeschlossen, sodass Gas aus der Quelle des Trägergases unter Umgehung des Bubblers in den Reaktorraum geleitet wird. Dies erfolgt für eine Zeitdauer, bis die beschichteten Körner abgekühlt sind. Währenddessen werden die beschichteten Körner des Erdalkalimetallsilikat-Leuchtstoffes bevorzugt nicht mehr erwärmt, sodass diese abkühlen. Sobald die Temperatur der beschichteten Körner des Erdalkalimetallsilikat-Leuchtstoffes eine Temperatur von weniger als 40°C aufweisen, wird das Einleiten des inerten Gases in den Reaktorraum bevorzugt beendet. Die beschichteten Körner des Erdalkalimetallsilikat-Leuchtstoffes können dann aus dem Reaktorraum entnommen werden. Es erfolgt bevorzugt kein anschließendes Tempern des Erdalkalimetallsilikat-Leuchtstoffes. Die Körner des Erdalkalimetallsilikat-Leuchtstoffes werden bevorzugt nicht einer weiteren Beschichtung unterzogen.

Durch den erfindungsgemäßen Erdalkalimetallsilikat-Leuchtstoff ist Strahlung in einem ersten Wellenlängenbereich absorbierbar und Strahlung in einem zweiten sich vom ersten Wellenlängenbereich unterscheidenden Wellenlängenbereich emittierbar. Der Erdalkalimetallsilikat-Leuchtstoff weist ein Grundgitter gemäß der allgemeinen chemischen Formel EAₓSi_{y}O_{z} auf, wobei EA durch ein oder mehrere Erdalkalimetalle gebildet ist und die Bedingung x, y, z > 0 gilt. Der Erdalkalimetallsilikat-Leuchtstoff liegt in Form von Körnern vor. In das Grundgitter ist ein Aktivator, wie beispielsweise Eu²⁺ oder Mn²⁺ dotiert.

Erfindungsgemäß weisen die Körner an ihrer Oberfläche eine Beschichtung aus Aluminiumoxidhydroxid auf, welche auch etwas Aluminiumoxid und/oder Aluminiumhydroxid enthalten kann.

Der erfindungsgemäße Erdalkalimetallsilikat-Leuchtstoff zeichnet sich durch einen Kern-Schalen-Aufbau aus. Dabei besteht der Kern aus dem dotierten Grundgitter, welcher von einer homogenen dichten bevorzugt halogenfreien Aluminiumoxidhydroxid-Beschichtung als Schale umhüllt ist. Die durch die Körner des Erdalkalimetallsilikat-Leuchtstoffes gebildeten Kerne weisen einen Durchmesser auf, der bevorzugt zwischen 1 µm und 2 mm beträgt.

Die Beschichtung der Körner des Erdalkalimetallsilikat-Leuchtstoffes weist eine Dicke auf, die bevorzugt mindestens 10 nm beträgt. Die Dicke beträgt bevorzugt höchstens 1 µm.

Bei bevorzugten Ausführungsformen des erfindungsgemäßen Erdalkalimetallsilikat-Leuchtstoffes umfasst die Beschichtung der Körner weiterhin organische und/oder aluminiumorganische Aliphate, Alkohole, Carbonyle und/oder Carboxyle. Diese Verbindungen resultieren aus der nicht vollständig reagierten flüchtigen aluminiumorganischen Verbindung, welche zur Beschichtung der Körner des Erdalkalimetallsilikat-Leuchtstoffes verwendet wurde. Bevorzugt umfasst die Beschichtung der Körner kein Alkalimetall und kein Halogen, welche bei Beschichtungen gemäß dem Stand der Technik als Verunreinigungen vorhanden sind.

Der erfindungsgemäße Erdalkalimetallsilikat-Leuchtstoff weist bevorzugt auch Merkmale auf, die im Zusammenhang mit dem erfindungsgemäßen Verfahren beschrieben sind.

Weitere Vorteile, Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: eine Anordnung zur Durchführung einer bevorzugten Ausführungsform eines erfindungsgemäßen Verfahrens;
- Fig. 2:: ein Diagramm einer relativen Intensität in Abhängigkeit von einer Betriebsdauer bei einem ersten Ausführungsbeispiel eines erfindungsgemäßen Erdalkalimetallsilikat-Leuchtstoffes;
- Fig. 3:: ein Diagramm einer relativen Intensität in Abhängigkeit von einer Betriebsdauer bei einem zweiten Ausführungsbeispiel des erfindungsgemäßen Erdalkalimetallsilikat-Leuchtstoffes; und
- Fig. 4:: ein Diagramm einer relativen Intensität in Abhängigkeit von einer Betriebsdauer bei einem dritten Ausführungsbeispiel des erfindungsgemäßen Erdalkalimetallsilikat-Leuchtstoffes.

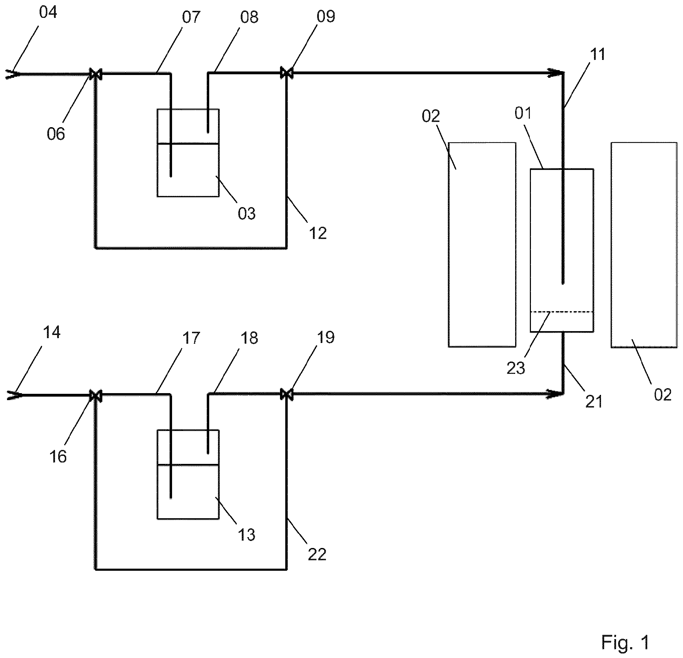

Fig. 1 zeigt eine Anordnung zur Durchführung einer bevorzugten Ausführungsform eines erfindungsgemäßen Verfahrens zum Verbessern der Langzeitstabilität eines Erdalkalimetallsilikat-Leuchtstoffes. Die Anordnung umfasst einen Reaktorraum 01, in welchem sich der zu behandelnde Erdalkalimetallsilikat-Leuchtstoff in Form von Körnern (nicht dargestellt) befindet. Der Reaktorraum 01 wird durch eine Ofenheizung 02 beheizt.

Die Anordnung umfasst weiterhin einen ersten Bubbler 03 zum Erwärmen von Trimethylaluminium oder einer anderen aluminiumorganischen Verbindung und zum Durchströmen des Trimethylaluminium mit einem ersten Trägergas, welches bevorzugt durch Stickstoff gebildet ist. Das Trägergas wird durch eine erste Trägergasquelle 04 bereitgestellt und über ein erstes vorderes Kurzschlussventil 06 zu einem ersten Zuleitungsrohr 07 geleitet, welches in einen Innenraum des ersten Bubblers 03 mündet. Aus dem Innenraum des ersten Bubblers 03 führt ein erstes Entnahmerohr 08 über ein erstes hinteres Kurzschlussventil 09 und über eine Lanze 11 in den Reaktorraum 01. Das durch die erste Trägergasquelle 04 bereitgestellte Trägergas trägt das im ersten Bubbler 03 erwärmte Trimethylaluminium, sodass es über das erste Entnahmerohr 08 und über die Lanze 11 in den Reaktorraum 01 geleitet wird. Werden das erste vordere Kurzschlussventil 06 und das erste hintere Kurzschlussventil 09 betätigt, so wird das reine Trägergas ohne Trimethylaluminium über einen ersten Kurzschluss 12 und über die Lanze 11 in den Reaktorraum 01 geleitet.

Die Anordnung umfasst zudem einen zweiten Bubbler 13 zum Erwärmen von Wasser und zum Durchströmen des Wassers mit einem zweiten Trägergas, welches bevorzugt ebenfalls durch Stickstoff gebildet ist. Das zweite Trägergas wird durch eine zweite Trägergasquelle 14 bereitgestellt und über ein zweites vorderes Kurzschlussventil 16 zu einem zweiten Zuleitungsrohr 17 geleitet, welches in einen Innenraum des zweiten Bubblers 13 mündet. Aus dem Innenraum des zweiten Bubblers 13 führt ein zweites Entnahmerohr 18 über ein zweites hinteres Kurzschlussventil 19 und über einen Einleitungsanschluss 21 in den Reaktorraum 01. Das durch die zweite Trägergasquelle 14 bereitgestellte Trägergas trägt das im zweiten Bubbler 13 erwärmte Wasser, sodass es über das zweite Entnahmerohr 18 und über den Einleitungsanschluss 21 in den Reaktorraum 01 geleitet wird. Werden das zweite vordere Kurzschlussventil 16 und das zweite hintere Kurzschlussventil 19 betätigt, so wird das reine Trägergas ohne Wasser über einen zweiten Kurzschluss 22 und über den Einleitungsanschluss 21 in den Reaktorraum 01 geleitet. Das in den Reaktorraum 01 eingeleitete Trägergas, welches in Abhängigkeit von der Stellung des zweiten vorderen Kurzschlussventiles 16 und das zweiten hinteren Kurzschlussventiles 19 erwärmtes Wasser trägt, wird im Reaktorraum 01 über einen Verteiler 23 verteilt, sodass es gleichmäßig über die Körner des Erdalkalimetallsilikat-Leuchtstoffes geleitet wird.

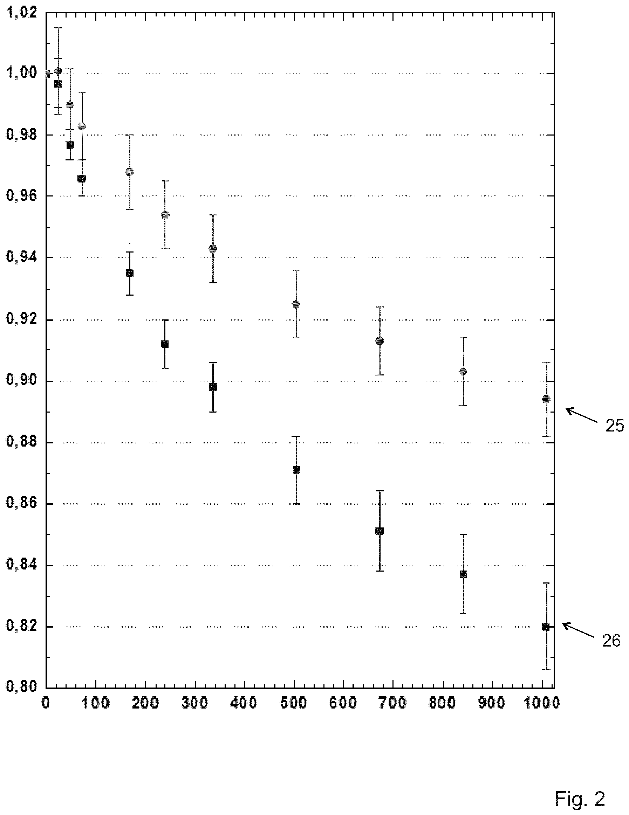

Fig. 2 zeigt ein Diagramm einer relativen Intensität in Abhängigkeit von einer Betriebsdauer bei einem ersten Ausführungsbeispiel eines erfindungsgemäßen beschichteten Erdalkalimetallsilikat-Leuchtstoffes im Vergleich zu einem entsprechenden unbeschichteten Erdalkalimetallsilikat-Leuchtstoff in einer LED-Anwendung. Dieses erste Ausführungsbeispiel des Erdalkalimetallsilikat-Leuchtstoffes weist abgesehen von der Beschichtung die chemische Formel (Sr,Ba,Ca)₂₋ₓEuₓSiO₄ mit 0 < x ≤ 0,5 auf.

Zur Herstellung dieses ersten Ausführungsbeispiels wurden 4,5 kg eines unbeschichteten Erdalkalimetallsilikat-Leuchtstoffes mit der oben genannten chemischen Formel in den Reaktorraum 01 (gezeigt in Fig. 1) gegeben, um diesen erfindungsgemäß zu beschichten. Der noch unbeschichtete Erdalkalimetallsilikat-Leuchtstoff wurde im Reaktorraum 01 (gezeigt in Fig. 1) auf eine Temperatur zwischen 170°C und 190°C erwärmt. Trimethylaluminium wurde im ersten Bubbler 03 (gezeigt in Fig. 1) auf eine Temperatur von 50°C erwärmt. Wasser wurde im zweiten Bubbler 13 (gezeigt in Fig. 1) auf eine Temperatur von 90°C erwärmt. Als Trägergas wurde jeweils Stickstoff verwendet. Ein Volumenstrom eines das Trimethylaluminium enthaltenden ersten Trägergasgemisches betrug 15 soll-Liter je Minute. Ein Volumenstrom eines das Wasser enthaltenden zweiten Trägergasgemisches betrug 5 soll-Liter je Minute. Es wurden 0,3 kg des Trimethylaluminiums verbraucht.

In Tabelle 1 sind verschiedene Eigenschaften des so erhaltenden ersten Ausführungsbeispiels des erfindungsgemäß beschichteten Erdalkalimetallsilikat-Leuchtstoffes im Vergleich zu dem noch unbeschichteten Erdalkalimetallsilikat-Leuchtstoff gegenübergestellt.

Eine Körperfarbe des ersten Ausführungsbeispiels des Erdalkalimetallsilikat-Leuchtstoffes ist gelb-grün und hat sich durch das Beschichten nicht verändert.

Die nach der Durchführung des erfindungsgemäßen Verfahrens gebildete Beschichtung ist sehr dicht. Wird der Erdalkalimetallsilikat-Leuchtstoff für eine Dauer von 60 Minuten in einer wässrigen Suspension angeordnet, so ist eine elektrische Leitfähigkeit bei dem ersten Ausführungsbeispiel des erfindungsgemäßen Erdalkalimetallsilikat-Leuchtstoffes um zwei Größenordnungen kleiner als die Leitfähigkeit des entsprechenden unbeschichteten Erdalkalimetallsilikat-Leuchtstoffes geworden, was auf eine geschlossene Beschichtung aus Aluminiumoxidhydroxid hinweist. Dieses Ergebnis zeigt, dass der erfindungsgemäß beschichtete Erdalkalimetallsilikat-Leuchtstoff in wässrigen Medien zumindest kurzzeitig, beispielsweise während eines Anrührens einer Leuchtstoffpaste, verwendet werden kann.

Die Emissionsintensität des ersten Ausführungsbeispiels des erfindungsgemäßen beschichteten Erdalkalimetallsilikat-Leuchtstoffes ist im Vergleich zu dem entsprechenden unbeschichteten Erdalkalimetallsilikat-Leuchtstoff im ungealterten Zustand nahezu gleich. In der Tabelle 1 sind relative Emissionsintensitäten gegenüber einem Vergleichsleuchtstoff für die Emissionen bei 254 nm EM₂₅₄ und bei 465 nm EM₄₆₅ für den ungealterten Zustand als Start angegeben. Werden das erste Ausführungsbeispiel des erfindungsgemäß beschichteten Erdalkalimetallsilikat-Leuchtstoffes und der entsprechende unbeschichtete Erdalkalimetallsilikat-Leuchtstoff für die Dauer von einer Woche in einem Klimaschrank bei einer Temperatur von 60°C und einer Luftfeuchtigkeit von 90 % angeordnet, so sinken die relativen Emissionsintensitäten EM₂₅₄ 60/90 und EM₄₆₅ 60/90 des unbeschichteten Erdalkalimetallsilikat-Leuchtstoffes signifikant, während die Emissionsintensitäten EM₂₅₄ 60/90 und EM₄₆₅ 60/90 des erfindungsgemäß beschichteten Erdalkalimetallsilikat-Leuchtstoffes konstant bleiben.

Das in Fig. 2 gezeigte Diagramm stellt die Langzeitstabilität der für die Dauer von mehreren Wochen in einem Klimaschrank bei einer Temperatur von 60°C und einer Luftfeuchtigkeit von 90 % angeordneten Erdalkalimetallsilikat-Leuchtstoffe bei einer Verwendung in einer LED-Lampe vergleichend dar. Auf der x-Achse des Diagrammes ist die Betriebsdauer in Stunden aufgetragen. Auf der y-Achse des Diagrammes ist ein relativer Lichtstrom des ersten Ausführungsbeispiels des erfindungsgemäß beschichteten Erdalkalimetallsilikat-Leuchtstoffes bzw. des entsprechenden unbeschichteten Erdalkalimetallsilikat-Leuchtstoffes aufgetragen. Ein erster Graph 25, welcher mit Kreisen markiert ist, zeigt die Messwerte für das erste Ausführungsbeispiel des erfindungsgemäß beschichteten Erdalkalimetallsilikat-Leuchtstoffes, während ein zweiter Graph 26, welcher mit Quadraten markiert ist, die Messwerte für den entsprechenden unbeschichteten Erdalkalimetallsilikat-Leuchtstoff zeigt. In beiden Fällen wurden die Messwerte für jeweils fünf der LED-Lampen gemittelt. In der Tabelle 1 sind ergänzend die Werte der relativen Lichtströme gegenüber dem jeweiligen Anfangswert im ungealterten Zustand nach einer Betriebsdauer von 1.000 Stunden gegenübergestellt.

**Tabelle 1**

| | unbeschichteter Erdalkalimetallsilikat-Leuchtstoff | erstes Ausführungsbeispiel |
|---|---|---|
| Körperfarbe | gelb-grün | gelb-grün |
| d₅₀ | 22,18 µm | 27,61 µm |
| Leitfähigkeit_{60 min} | 1,82 mS/cm | 0,08 mS/cm |
| Em₂₅₄ - Start | 100 % | 100 % |
| Em₂₅₄ - 60/90 | 95 % | 99 % |
| Em₄₆₅ - Start | 100 % | 100 % |
| EM₄₆₅ - 60/90 | 98 % | 101 % |
| 1.000 h LED | 82 % | 90 % |

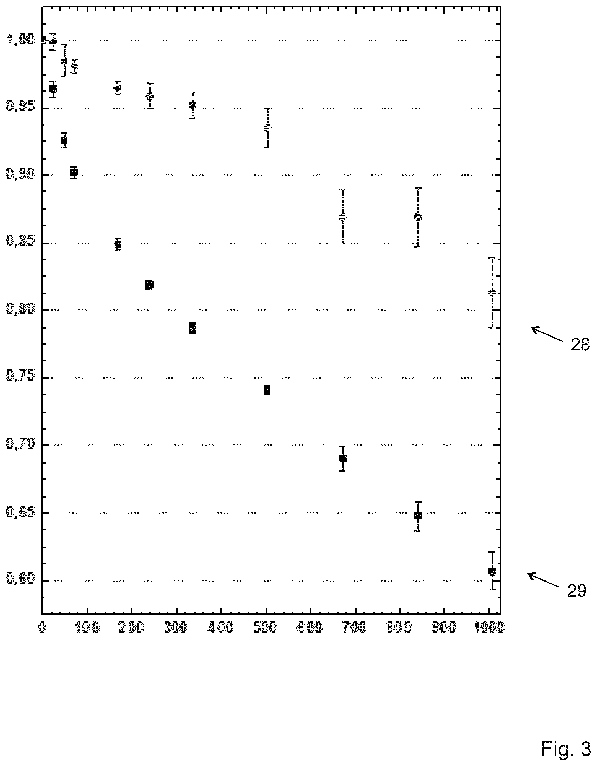

Fig. 3 zeigt ein Diagramm einer relativen Intensität in Abhängigkeit von einer Betriebsdauer bei einem zweiten Ausführungsbeispiel des erfindungsgemäßen beschichteten Erdalkalimetallsilikat-Leuchtstoffes im Vergleich zu einem entsprechenden unbeschichteten Erdalkalimetallsilikat-Leuchtstoff in einer LED-Anwendung. Dieses zweite Ausführungsbeispiel des Erdalkalimetallsilikat-Leuchtstoffes weist abgesehen von der Beschichtung die Formel (Ba,Sr,Ca)₂₋ₓEuₓSiO₄ mit 0 < x ≤ 0,5 auf.

Zur Herstellung dieses zweiten Ausführungsbeispiels wurden 4,5 kg eines unbeschichteten Erdalkalimetallsilikat-Leuchtstoffes mit der oben genannten chemischen Formel in den Reaktorraum 01 (gezeigt in Fig. 1) gegeben, um diesen erfindungsgemäß zu beschichten. Der noch unbeschichtete Erdalkalimetallsilikat-Leuchtstoff wurde im Reaktorraum 01 (gezeigt in Fig. 1) auf eine Temperatur zwischen 170°C und 190°C erwärmt. Trimethylaluminium wurde im ersten Bubbler 03 (gezeigt in Fig. 1) auf eine Temperatur von 50°C erwärmt. Wasser wurde im zweiten Bubbler 13 (gezeigt in Fig. 1) auf eine Temperatur von 75°C erwärmt. Als Trägergas wurde jeweils Stickstoff verwendet. Ein Volumenstrom eines das Trimethylaluminium enthaltenden ersten Trägergasgemisches betrug 15 soll-Liter je Minute. Ein Volumenstrom eines das Wasser enthaltenden zweiten Trägergasgemisches betrug 5 soll-Liter je Minute. Es wurden 0,2 kg des Trimethylaluminiums verbraucht.

In Tabelle 2 sind verschiedene Eigenschaften des so erhaltenden zweiten Ausführungsbeispiels des erfindungsgemäß beschichteten Erdalkalimetallsilikat-Leuchtstoffes im Vergleich zu dem noch unbeschichteten Erdalkalimetallsilikat-Leuchtstoff gegenübergestellt.

Eine Körperfarbe des zweiten Ausführungsbeispiels des Erdalkalimetallsilikat-Leuchtstoffes ist grün und hat sich durch das Beschichten nicht verändert.

Die nach der Durchführung des erfindungsgemäßen Verfahrens gebildete Beschichtung ist sehr dicht. Wird der Erdalkalimetallsilikat-Leuchtstoff für eine Dauer von 60 Minuten in einer wässrigen Suspension angeordnet, so ist eine elektrische Leitfähigkeit bei dem zweiten Ausführungsbeispiel des erfindungsgemäßen Erdalkalimetallsilikat-Leuchtstoffes um etwa eine Größenordnungen kleiner als die Leitfähigkeit des entsprechenden unbeschichteten Erdalkalimetallsilikat-Leuchtstoffes geworden, was auf eine geschlossene Beschichtung aus Aluminiumoxidhydroxid hinweist. Dieses Ergebnis zeigt, dass der erfindungsgemäß beschichtete Erdalkalimetallsilikat-Leuchtstoff in wässrigen Medien zumindest kurzzeitig, beispielsweise während eines Anrührens einer Leuchtstoffpaste, verwendet werden kann.

Die Emissionsintensität des zweiten Ausführungsbeispiels des erfindungsgemäßen beschichteten Erdalkalimetallsilikat-Leuchtstoffes ist im Vergleich zu dem entsprechenden unbeschichteten Erdalkalimetallsilikat-Leuchtstoff im ungealterten Zustand nahezu gleich. In der Tabelle 2 sind relative Emissionsintensitäten gegenüber einem Vergleichsleuchtstoff für die Emissionen bei 254 nm EM₂₅₄ und bei 465 nm EM₄₆₅ für den ungealterten Zustand als Start angegeben. Werden das zweite Ausführungsbeispiel des erfindungsgemäß beschichteten Erdalkalimetallsilikat-Leuchtstoffes und der entsprechende unbeschichtete Erdalkalimetallsilikat-Leuchtstoff für die Dauer von einer Woche in einem Klimaschrank bei einer Temperatur von 60°C und einer Luftfeuchtigkeit von 90 % angeordnet, so sinken die relativen Emissionsintensitäten EM₂₅₄ 60/90 und EM₄₆₅ 60/90 der Erdalkalimetallsilikat-Leuchtstoffe nahezu gleich stark.

Das in Fig. 3 gezeigte Diagramm stellt die Langzeitstabilität der für die Dauer von mehreren Wochen in einem Klimaschrank bei einer Temperatur von 60°C und einer Luftfeuchtigkeit von 90 % angeordneten Erdalkalimetallsilikat-Leuchtstoffe bei einer Verwendung in einer LED-Lampe vergleichend dar. Auf der x-Achse des Diagrammes ist die Betriebsdauer in Stunden aufgetragen. Auf der y-Achse des Diagrammes ist ein relativer Lichtstrom des zweiten Ausführungsbeispiels des erfindungsgemäß beschichteten Erdalkalimetallsilikat-Leuchtstoffes bzw. des entsprechenden unbeschichteten Erdalkalimetallsilikat-Leuchtstoffes aufgetragen. Ein dritter Graph 28, welcher mit Kreisen markiert ist, zeigt die Messwerte für das zweite Ausführungsbeispiel des erfindungsgemäß beschichteten Erdalkalimetallsilikat-Leuchtstoffes, während ein vierter Graph 29, welcher mit Quadraten markiert ist, die Messwerte für den entsprechenden unbeschichteten Erdalkalimetallsilikat-Leuchtstoff zeigt. In beiden Fällen wurden die Messwerte für jeweils fünf der LED-Lampen gemittelt.

Das zweite Ausführungsbeispiel des erfindungsgemäß beschichteten Erdalkalimetallsilikat-Leuchtstoffes weist bei einer Verwendung in der LED-Lampe eine deutlich erhöhte Stabilität als der entsprechende unbeschichtete Erdalkalimetallsilikat-Leuchtstoff auf. Bereits nach einer Betriebsdauer von einem Tag beträgt der Unterschied der relativen Lichtströme über 3 % und nach einer Betriebsdauer von 1.000 h ist der relative Lichtstrom des zweiten Ausführungsbeispiels des erfindungsgemäß beschichteten Erdalkalimetallsilikat-Leuchtstoffes mehr als 20 % geringer als der relative Lichtstrom des entsprechenden unbeschichteten Leuchtstoffes abgefallen. Gleichzeitig ist der Farbort des zweiten Ausführungsbeispiels des erfindungsgemäß beschichteten Erdalkalimetallsilikat-Leuchtstoffes nach einer Betriebsdauer von 1.000 h deutlich weniger verschoben. Diese geringe Verschiebung beträgt nur Δx = -0,003; Δy = - 0,018, während die Verschiebung des Farbortes beim entsprechenden unbeschichteten Erdalkalimetallsilikat-Leuchtstoff Δx = -0,011; Δy = -0,056 beträgt. Diese Werte zeigen, dass der erfindungsgemäß beschichtete Erdalkalimetallsilikat-Leuchtstoff auch bei einer Verwendung in der LED-Lampe deutlich stabiler ist.

In der Tabelle 2 sind ergänzend die Werte der relativen Lichtströme gegenüber dem jeweiligen Anfangswert im ungealterten Zustand nach einer Betriebsdauer von 1.000 Stunden gegenübergestellt.

**Tabelle 2**

| | unbeschichteter Erdalkalimetallsilikat-Leuchtstoff | zweites Ausführungsbeispiel |
|---|---|---|
| Körperfarbe | grün | grün |
| d₅₀ | 15,88 µm | 17,39 µm |
| Leitfähigkeit_{60 min} | 0,87 mS/cm | 0,05 mS/cm |
| Em₂₅₄ - Start | 100 % | 100 % |
| Em₂₅₄ - 60/90 | 98 % | 99 % |
| Em₄₆₅ - Start | 100 % | 100 % |
| Em₄₆₅ - 60/90 | 98 % | 98 % |
| 1.000 h LED | 61 % | 82 % |

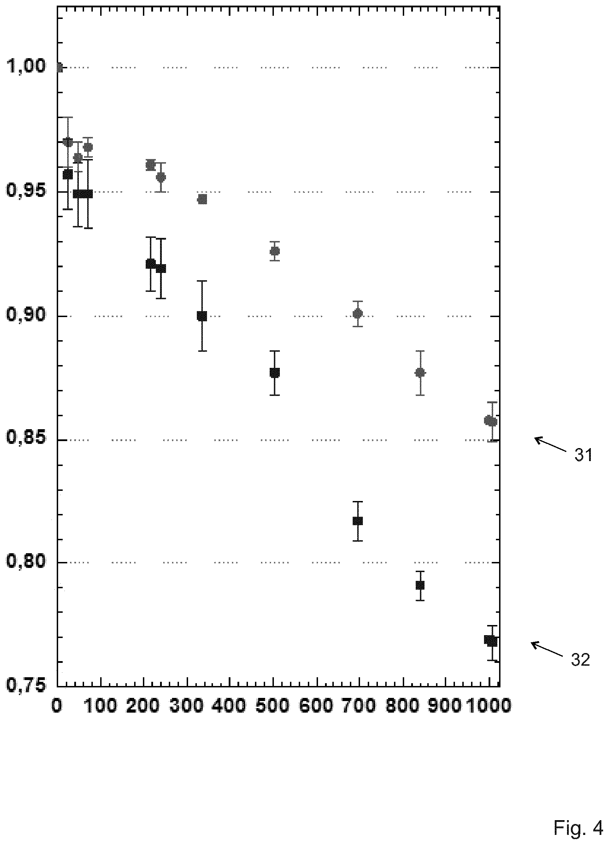

Fig. 4 zeigt ein Diagramm einer relativen Intensität in Abhängigkeit von einer Betriebsdauer bei einem dritten Ausführungsbeispiel des erfindungsgemäßen beschichteten Erdalkalimetallsilikat-Leuchtstoffes im Vergleich zu einem entsprechenden unbeschichteten Erdalkalimetallsilikat-Leuchtstoff in einer LED-Anwendung. Dieses dritte Ausführungsbeispiel des Erdalkalimetallsilikat-Leuchtstoffes weist abgesehen von der Beschichtung die Formel Sr₃₋ₓMgEuₓSi₂O₈ mit 0 < x ≤ 0,5 auf.

Zur Herstellung dieses dritten Ausführungsbeispiels wurden 4,0 kg eines unbeschichteten Erdalkalimetallsilikat-Leuchtstoffes mit der oben genannten chemischen Formel in den Reaktorraum 01 (gezeigt in Fig. 1) gegeben, um diesen erfindungsgemäß zu beschichten. Der noch unbeschichtete Erdalkalimetallsilikat-Leuchtstoff wurde im Reaktorraum 01 (gezeigt in Fig. 1) auf eine Temperatur zwischen 170°C und 195°C erwärmt. Trimethylaluminium wurde im ersten Bubbler 03 (gezeigt in Fig. 1) auf eine Temperatur von 50°C erwärmt. Wasser wurde im zweiten Bubbler 13 (gezeigt in Fig. 1) auf eine Temperatur von 70°C erwärmt. Als Trägergas wurde jeweils Stickstoff verwendet. Ein Volumenstrom eines das Trimethylaluminium enthaltenden ersten Trägergasgemisches betrug 7,5 soll-Liter je Minute. Ein Volumenstrom eines das Wasser enthaltenden zweiten Trägergasgemisches betrug 5 soll-Liter je Minute. Es wurden 0,3 kg des Trimethylaluminiums verbraucht.

In Tabelle 3 sind verschiedene Eigenschaften des so erhaltenden dritten Ausführungsbeispiels des erfindungsgemäß beschichteten Erdalkalimetallsilikat-Leuchtstoffes im Vergleich zu dem noch unbeschichteten Erdalkalimetallsilikat-Leuchtstoff gegenübergestellt.

Eine Körperfarbe des dritten Ausführungsbeispiels des Erdalkalimetallsilikat-Leuchtstoffes ist ein helles Blaugrün und hat sich durch das Beschichten nicht verändert.

Die nach der Durchführung des erfindungsgemäßen Verfahrens gebildete Beschichtung ist sehr dicht. Wird der Erdalkalimetallsilikat-Leuchtstoff für eine Dauer von 60 Minuten in einer wässrigen Suspension angeordnet, so ist eine elektrische Leitfähigkeit bei dem dritten Ausführungsbeispiel des erfindungsgemäßen Erdalkalimetallsilikat-Leuchtstoffes um eine Größenordnung kleiner als die Leitfähigkeit des entsprechenden unbeschichteten Erdalkalimetallsilikat-Leuchtstoffes geworden, was auf eine geschlossene Beschichtung aus Aluminiumoxidhydroxid hinweist. Dieses Ergebnis zeigt, dass der erfindungsgemäß beschichtete Erdalkalimetallsilikat-Leuchtstoff in wässrigen Medien zumindest kurzzeitig, beispielsweise während eines Anrührens einer Leuchtstoffpaste, verwendet werden kann.

Die Emissionsintensität des dritten Ausführungsbeispiels des erfindungsgemäßen beschichteten Erdalkalimetallsilikat-Leuchtstoffes ist im Vergleich zu dem entsprechenden unbeschichteten Erdalkalimetallsilikat-Leuchtstoff im ungealterten Zustand nahezu gleich. In der Tabelle 3 sind relative Emissionsintensitäten gegenüber einem Vergleichsleuchtstoff für die Emission bei 405 nm EM₄₀₅ für den ungealterten Zustand als Start angegeben. Werden das dritte Ausführungsbeispiel des erfindungsgemäß beschichteten Erdalkalimetallsilikat-Leuchtstoffes und der entsprechende unbeschichtete Erdalkalimetallsilikat-Leuchtstoff für die Dauer von einer Woche in einem Klimaschrank bei einer Temperatur von 60°C und einer Luftfeuchtigkeit von 90 % angeordnet, so steigen die relativen Emissionsintensitäten EM₄₀₅ 60/90 der Erdalkalimetallsilikat-Leuchtstoffe nahezu gleich stark an.

Das in Fig. 4 gezeigte Diagramm stellt die Langzeitstabilität der für die Dauer von einer Woche in einem Klimaschrank bei einer Temperatur von 60°C und einer Luftfeuchtigkeit von 90 % angeordneten Erdalkalimetallsilikat-Leuchtstoffe bei einer Verwendung in einer LED-Lampe vergleichend dar. Auf der x-Achse des Diagrammes ist die Betriebsdauer in Stunden aufgetragen. Auf der y-Achse des Diagrammes ist ein relativer Lichtstrom des dritten Ausführungsbeispiels des erfindungsgemäß beschichteten Erdalkalimetallsilikat-Leuchtstoffes bzw. des entsprechenden unbeschichteten Erdalkalimetallsilikat-Leuchtstoffes aufgetragen. Ein fünfter Graph 31, welcher mit Kreisen markiert ist, zeigt die Messwerte für das dritte Ausführungsbeispiel des erfindungsgemäß beschichteten Erdalkalimetallsilikat-Leuchtstoffes, während ein sechster Graph 32, welcher mit Quadraten markiert ist, die Messwerte für den entsprechenden unbeschichteten Erdalkalimetallsilikat-Leuchtstoff zeigt. In beiden Fällen wurden die Messwerte für jeweils zehn der LED-Lampen gemittelt.

Das dritte Ausführungsbeispiel des erfindungsgemäß beschichteten Erdalkalimetallsilikat-Leuchtstoffes weist bei einer Verwendung in der LED-Lampe eine erhöhte Stabilität als der entsprechende unbeschichtete Erdalkalimetallsilikat-Leuchtstoff auf.

In der Tabelle 3 sind ergänzend die Werte der relativen Lichtströme gegenüber dem jeweiligen Anfangswert im ungealterten Zustand nach einer Betriebsdauer von 1.000 Stunden gegenübergestellt.

**Tabelle 3**

| | unbeschichteter Erdalkalimetallsilikat-Leuchtstoff | drittes Ausführungsbeispiel |
|---|---|---|
| Körperfarbe | helles Blaugrün | helles Blaugrün |
| d₅₀ | 11,67 µm | 11,70 µm |
| Leitfähigkeit_{60 min} | 0,16 mS/cm | 0,02 mS/cm |
| EM₄₀₅ - Start | 100 % | 100 % |
| Em₄₀₅ - 60/90 | 101 % | 101 % |
| 1.000 h LED | 77 % | 86 % |

### Bezugszeichenliste

- 01: Reaktorraum
- 02: Ofenheizung
- 03: erster Bubbler
- 04: erste Trägergasquelle
- 05: -
- 06: erstes vorderes Kurzschlussventil
- 07: erstes Zuleitungsrohr
- 08: erstes Entnahmerohr
- 09: erstes hinteres Kurzschlussventil
- 10: -
- 11: Lanze
- 12: erster Kurzschluss
- 13: zweiter Bubbler
- 14: zweite Trägergasquelle
- 15: -
- 16: zweites vorderes Kurzschlussventil
- 17: zweites Zuleitungsrohr
- 18: zweites Entnahmerohr
- 19: zweites hinteres Kurzschlussventil
- 20: -
- 21: Einleitungsanschluss
- 22: Verteiler
- 23: -
- 24: -
- 25: erster Graph
- 26: zweiter Graph
- 27: -
- 28: dritter Graph
- 29: vierter Graph
- 30: -
- 31: fünfter Graph
- 32: sechster Graph

## Patentansprüche

1. Verfahren zum Verbessern der Langzeitstabilität eines Erdalkalimetallsilikat-Leuchtstoffes, welcher in Form von Körnern ausgebildet ist und ein Erdalkalimetallsilikat der allgemeinen chemischen Formel EAₓSi_{y}O_{z} als Grundgitter aufweist, wobei EA durch ein oder mehrere Erdalkalimetalle gebildet ist und die Bedingung x, y, z > 0 gilt, wobei in das Grundgitter ein Aktivator dotiert ist, und wobei das Verfahren die folgenden Schritte umfasst:
- Erwärmen der Körner des Erdalkalimetallsilikat-Leuchtstoffes in einem Reaktorraum (01);
- Erwärmen einer flüchtigen aluminiumorganischen Verbindung und Durchströmen der erwärmten flüchtigen aluminiumorganischen Verbindung mit einem ersten Trägergas, wodurch ein die flüchtige aluminiumorganische Verbindung enthaltendes erstes Trägergasgemisch erhalten wird;
- Erwärmen von Wasser und Durchströmen des erwärmten Wassers mit einem zweiten Trägergas, wodurch ein das Wasser enthaltendes zweites Trägergasgemisch erhalten wird;
- Einleiten des die flüchtige aluminiumorganische Verbindung enthaltenden ersten Trägergasgemischs und des das Wasser enthaltenden zweiten Trägergasgemischs in den Reaktorraum (01), wo die Körner des Erdalkalimetallsilikat-Leuchtstoffes von den Trägergasgemischen eingehüllt werden, wodurch die flüchtige aluminiumorganische Verbindung und das Wasser miteinander zumindest überwiegend zu Aluminiumoxidhydroxid reagieren, welches eine Beschichtung der Körner des Erdalkalimetallsilikat-Leuchtstoffes ausbildet.

2. Verfahren nach Anspruch 1, **dadurch gekennzeichnet, dass** die flüchtige aluminiumorganische Verbindung durch Trimethylaluminium gebildet ist.

3. Verfahren nach Anspruch 1 oder 2, **dadurch gekennzeichnet, dass** die flüchtige aluminiumorganische Verbindung auf eine Temperatur zwischen 15°C und 70°C erwärmt wird.

4. Verfahren nach einem der Ansprüche 1 bis 3, **dadurch gekennzeichnet, dass** das Wasser auf eine Temperatur zwischen 50°C und 90°C erwärmt wird.

5. Verfahren nach einem der Ansprüche 1 bis 4, **dadurch gekennzeichnet, dass** die Körner des Erdalkalimetallsilikat-Leuchtstoffes in dem Reaktorraum (01) auf eine Temperatur zwischen 150°C und 250°C erwärmt werden.

6. Verfahren nach einem der Ansprüche 1 bis 5, **dadurch gekennzeichnet, dass** das Erwärmen und Durchströmen der flüchtigen aluminiumorganischen Verbindung und das Erwärmen und Durchströmen des Wassers separat und in jeweils einem Bubbler (03, 13) erfolgen.

7. Verfahren nach einem der Ansprüche 1 bis 6, **dadurch gekennzeichnet, dass** das die flüchtige aluminiumorganische Verbindung enthaltende erste Trägergasgemisch durch eine Bodenplatte des Reaktorraumes (01) in den Reaktorraum (01) geleitet wird, und das das Wasser enthaltenden zweite Trägergasgemisch durch eine in den Reaktorraum (01) ragende Zuführung (11) in den Reaktorraum (01) geleitet wird.

8. Erdalkalimetallsilikat-Leuchtstoff, durch welchen Strahlung in einem ersten Wellenlängenbereich absorbierbar und Strahlung in einem zweiten sich vom ersten Wellenlängenbereich unterscheidenden Wellenlängenbereich emittierbar ist, wobei der Erdalkalimetallsilikat-Leuchtstoff in Form von Körnern ausgebildet ist und ein Erdalkalimetallsilikat der allgemeinen chemischen Formel EAₓSi_{y}O_{z} als Grundgitter aufweist, welches mit einem Aktivator dotiert ist, und wobei EA durch ein oder mehrere Erdalkalimetalle gebildet ist und die Bedingung x, y, z > 0 gilt, **dadurch gekennzeichnet, dass** die Körner an ihrer Oberfläche eine Beschichtung aus Aluminiumoxidhydroxid aufweisen.

9. Erdalkalimetallsilikat-Leuchtstoff nach Anspruch 8, **dadurch gekennzeichnet, dass** das Grundgitter durch eine der folgenden chemischen Formeln beschrieben ist:
- (BaₐSr_{b}Ca_{c})₂SiO₄, wobei zumindest eine der Variablen a, b und c größer als Null ist und a + b + c = 1 gilt; und
- Sr₃MgSi₂O₈.

10. Erdalkalimetallsilikat-Leuchtstoff nach Anspruch 8 oder 9, **dadurch gekennzeichnet, dass** der Aktivator durch Eu²⁺ und/oder Mn²⁺ gebildet ist.

11. Erdalkalimetallsilikat-Leuchtstoff nach einem der Ansprüche 8 bis 10, **dadurch gekennzeichnet, dass** die Körner des Erdalkalimetallsilikat-Leuchtstoffes jeweils einen Durchmesser besitzen, welcher zwischen 1 µm und 2 mm beträgt.

12. Erdalkalimetallsilikat-Leuchtstoff nach einem der Ansprüche 8 bis 11, **dadurch gekennzeichnet, dass** die Beschichtung an der Oberfläche der Körner mit einem Verfahren gemäß einem der Ansprüche 1 bis 7 erzeugt wurde.

## Claims

1. Process for improving the long-term stability of an alkaline earth metal silicate phosphor, which is formed in the form of grains and has an alkaline earth metal silicate of the general chemical formula EAₓSi_{y}O_{z} as the basic lattice, where EA is formed by one or more alkaline earth metals and the condition x, y, z > 0 applies, wherein an activator is doped into the base grid, and wherein the method comprises the following steps:
- **Heating** the grains of alkaline earth metal silicate phosphor in a reactor chamber (01);
- **Heating of** a volatile organoaluminum compound and **Flowing** the heated volatile organoaluminum compound with a first carrier gas, thereby obtaining a first carrier gas mixture containing the volatile organoaluminum compound;
- **Heating** water and **Flowing** a second carrier gas **through the** heated water, whereby a second carrier gas mixture containing the water is obtained;
- **introducing the** first carrier gas mixture containing the volatile organoaluminum compound and the second carrier gas mixture containing the water into the reactor chamber (01), where the grains of the alkaline earth metal silicate phosphor are enveloped by the carrier gas mixtures, whereby the volatile organoaluminum compound and the water react with each other at least predominantly to form alumina hydroxide, which forms a coating on the grains of the alkaline earth metal silicate phosphor.

2. Method according to claim 1, **characterized in that** the volatile organoaluminum compound is formed by trimethylaluminum.

3. Method according to claim 1 or 2, **characterized in that** the volatile organoaluminum compound is heated to a temperature between 15°C and 70°C.

4. Method according to any one of claims 1 to 3, **characterized in that** the water is heated to a temperature between 50°C and 90°C.

5. Method according to any one of claims 1 to 4, **characterized in that** the grains of the alkaline earth metal silicate phosphor in the reactor chamber (01) are heated to a temperature between 150°C and 250°C.

6. Method according to any one of claims 1 to 5, **characterized in that** the heating and flow of the volatile organoaluminum compound and the heating and flow of the water are carried out separately and in one bubbler (03, 13) each.

7. Method according to any one of claims 1 to 6, **characterized in that** the first carrier gas mixture containing the volatile organoaluminum compound is passed into the reactor chamber (01) through a bottom plate of the reactor chamber (01), and the second carrier gas mixture containing the water is fed into the reactor chamber (01) through a feed (11) projecting into the reactor chamber (01).

8. Alkaline earth metal silicate phosphor, through which radiation in a first wavelength range can be absorbed and radiation in a second wavelength range different from the first wavelength range can be emitted, the alkaline earth metal silicate phosphor being in the form of grains and having an alkaline earth metal silicate of the general chemical formula EAₓSi_{y}O_{z} as the basic lattice, which is doped with an activator, and where EA is formed by one or more alkaline earth metals and the condition x, y, z > 0 applies, **characterized in that** the grains have a coating of aluminum oxide hydroxide on their surface.

9. Alkaline earth metal silicate phosphor according to claim 8, **characterized in that** the basic lattice is described by one of the following chemical formulas:
- (BaₐSr_{b}Ca_{c})₂ SiO₄ where at least one of a, b and c is greater than zero and a + b + c = 1; and
- Sr₃MgSi₂O₈.

10. Alkaline earth metal silicate phosphor according to claim 8 or 9, **characterized in that** the activator is formed by Eu²⁺ and/or Mn²⁺.

11. Alkaline earth metal silicate phosphor according to any one of claims 8 to 10, **characterized in that** the grains of the alkaline earth metal silicate phosphor each have a diameter of between 1 µm and 2 mm.

12. Alkaline earth metal silicate phosphor according to any one of claims 8 to 11, **characterized in that** the coating on the surface of the grains has been produced by a process according to any one of claims 1 to 7.

## Revendications

1. Procédé pour améliorer la stabilité à long terme d'une substance luminescente de silicate de métal alcalino-terreux, qui se présente sous la forme de grains et présente un silicate de métal alcalino-terreux de formule chimique générale EAₓSi_{y}O_{z} comme réseau de base, dans lequel EA est formé par un ou plusieurs métaux alcalino-terreux et la condition x, y, z>0 s'applique, dans lequel un activateur est dopé dans le réseau de base, et dans lequel le procédé comprend les étapes suivantes consistant à :
- chauffer les grains de la substance luminescente de silicate de métal alcalino-terreux dans un espace de réacteur (01) ;
- chauffer un composé organo-aluminique volatil et laisser s'écouler à travers le composé organo-aluminique volatil chauffé un premier gaz porteur, moyennant quoi un premier mélange de gaz porteur contenant le composé organo-aluminique volatil est obtenu ;
- chauffer de l'eau et laisser s'écouler l'eau chauffée avec un second gaz porteur, moyennant quoi un second mélange de gaz porteur contenant l'eau est obtenu ;
- introduire le premier mélange de gaz porteur contenant le composé organo-aluminique volatil et le second mélange de gaz porteur contenant l'eau dans la chambre de réacteur (01), où les grains de la substance luminescente de silicate de métal alcalino-terreux sont enrobés par les mélanges de gaz porteur, moyennant quoi le composé organo-aluminique volatil et l'eau réagissent entre eux au moins majoritairement en hydroxyde d'alumine, qui forme un revêtement des grains de la substance luminescente de silicate de métal alcalino-terreux.

2. Procédé selon la revendication 1, **caractérisé en ce que** le composé organo-aluminique volatil est formé par du triméthylaluminium.

3. Procédé selon la revendication 1 ou 2, **caractérisé en ce que** le composé organo-aluminique volatil est chauffé à une température comprise entre 15°C et 70°C.

4. Procédé selon une des revendications 1 à 3, **caractérisé en ce que** l'eau est chauffée à une température comprise entre 50°C et 90°C.

5. Procédé selon une des revendications 1 à 4, **caractérisé en ce que** les grains de substance luminescente de silicate de métal alcalino-terreux dans la chambre de réacteur (01) sont chauffés à une température comprise entre 150°C et 250°C.

6. Procédé selon une des revendications 1 à 5, **caractérisé en ce que** le chauffage et l'écoulement du composé organo-aluminique volatil et le chauffage et l'écoulement de l'eau séparément ont lieu séparément et dans un bouillonneur respectif (03, 13).

7. Procédé selon une des revendications 1 à 6, **caractérisé en ce que** le premier mélange de gaz porteur contenant le composé organo-aluminique volatil est guidé à travers une plaque de base de la chambre de réacteur (01) dans la chambre de réacteur (01), et le second mélange de gaz porteur contenant l'eau est guidé à travers une alimentation (11) faisant saillie dans la chambre de réacteur (01) dans la chambre de réacteur (01).

8. Substance luminescente de silicate de métal alcalino-terreux, au moyen de laquelle le rayonnement peut être absorbé dans une première plage de longueurs d'onde et le rayonnement peut être émis dans une seconde plage de longueurs d'onde se différenciant de la première plage de longueurs d'onde, dans lequel la substance luminescente de silicate de métal alcalino-terreux est conçue sous forme de grains et présente un silicate de métal alcalino-terreux de formule chimique générale EAₓSi_{y}O_{z} comme réseau de base, qui est dopé avec un activateur, et dans lequel EA est formé par un ou plusieurs métaux alcalino-terreux et la condition x, y, z>0 s'applique, **caractérisé en ce que** les grains présentent un revêtement d'oxyde d'aluminium hydroxyde sur leur surface.

9. Substance luminescente de silicate de métal alcalino-terreux selon la revendication 8, **caractérisée en ce que** le réseau de base est décrit par une des formules chimiques suivantes :
- (BaₐSr_{b}Ca_{c})₂SiO₄, dans lequel au moins une des variables a, b et c est supérieure à zéro et a + b + c = 1 ; et
- Sr₃MgSi₂O₈.

10. Substance luminescente de silicate de métal alcalino-terreux selon la revendication 8 ou 9, **caractérisée en ce que** l'activateur est formé par Eu²⁺ et/ou Mn²⁺.

11. Substance luminescente de silicate de métal alcalino-terreux selon une des revendications 8 à 10, **caractérisée en ce que** les grains de la substance luminescente de silicate de métal alcalino-terreux ont chacun un diamètre compris entre 1 µm et 2 mm.

12. Substance luminescente de silicate de métal alcalino-terreux selon une des revendications 8 à 11, **caractérisé en ce que** le revêtement a été généré à la surface des grains par un procédé selon une des revendications 1 à 7.
